(19) **Europäisches Patentamt**
**European Patent Office**
**Office européen des brevets**

(11) **EP 2 225 946 A2**

(12) **EUROPÄISCHE PATENTANMELDUNG**

(43) Veröffentlichungstag:
**08.09.2010 Patentblatt 2010/36**

(51) Int Cl.:
***A22C 9/00*** *(2006.01)*

(21) Anmeldenummer: **10155391.5**

(22) Anmeldetag: **03.03.2010**

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK SM TR**

(30) Priorität: **07.03.2009 DE 202009003222 U**

(71) Anmelder: **Schröder Maschinenbau KG
33824 Werther (DE)**

(72) Erfinder: **Umbach, Christoph
33824, Werther (DE)**

(74) Vertreter: **TER MEER - STEINMEISTER &
PARTNER GbR
Artur-Ladebeck-Strasse 51
33617 Bielefeld (DE)**

(54) **Vorrichtung zur Behandlung von Lebensmittelprodukten**

(57) Vorrichtung zur Behandlung von Lebensmittelprodukten (12), mit einem Förderer (10) für die Lebensmittelprodukte, mindestens einem Arbeitswerkzeug (14), und einem Antrieb (18, 20), der das Arbeitswerkzeug (14) zur einer Bewegung relativ zu dem Förderer (10) antreibt, wobei diese Bewegung eine Komponente in einer Richtung (Y) senkrecht zur Transportrichtung (X) des Förderers (10) aufweist, **dadurch gekennzeichnet, dass** der Antrieb mindestens eine drehangetriebene Kurbel (18) aufweist, an der das Arbeitswerkzeug (14) exzentrisch gelagert ist.

Fig. 1

EP 2 225 946 A2

## Beschreibung

Die Erfindung betrifft eine Vorrichtung zur Behandlung von Lebensmittelprodukten, insbesondere von Fleisch, Fisch oder Geflügel, mit einem Förderer für die Lebensmittelprodukte, mindestens einem Arbeitswerkzeug und einem Antrieb, der das Arbeitswerkzeug zu einer Bewegung relativ zu dem Förderer antreibt, wobei diese Bewegung eine Komponente in einer Richtung senkrecht zur Transportrichtung des Förderers aufweist.

Beispiele für Vorrichtungen dieser Art sind etwa Pökelmaschinen, Steaker oder Maschinen zum Weichklopfen von Fleisch. Im Fall einer Pökelmaschine besteht das Arbeitswerkzeug aus einem Nadelträger, der mit Nadeln zur Injektion von Pökellake in das Fleisch bestückt ist. Wenn der Nadelträger senkrecht zur Transportrichtung des Förderers bewegt wird, stechen die Nadeln in das Produkt ein, so dass die Pökellake in das Produkt injiziert wird.

Im Fall eines Steakers ist das Arbeitswerkzeug anstelle von Nadeln mit kurzen Messern bestückt, die die Oberfläche des Produkts einschneiden. Bei einer Vorrichtung zum Weichklopfen von Fleisch bestehen die Arbeitswerkzeuge aus Schlegeln, die auf das Fleisch klopfen.

Bei herkömmlichen Vorrichtungen dieser Art wird das Produkt mit Hilfe des Förderers in waagerechter Richtung transportiert, und die Arbeitswerkzeuge sind vertikalbeweglich an einem Portal über dem Förderer angeordnet. Der Förderer wird schrittweise bewegt, und bei jedem Halt des Förderers wird das Arbeitswerkzeug auf das Produkt abgesenkt.

Aufgabe der Erfindung ist es, eine Vorrichtung der eingangs genannten Art zu schaffen, die eine effizientere Behandlung der Lebensmittelprodukte ermöglicht.

Diese Aufgabe wird erfindungsgemäß dadurch gelöst, dass der Antrieb mindestens eine drehangetriebene Kurbel aufweist, an der das Arbeitswerkzeug exzentrisch gelagert ist.

Das Arbeitswerkzeug führt somit nicht nur eine lineare Bewegung in vertikaler Richtung, also in der Richtung senkrecht zur Transportrichtung des Förderers aus, sondern eine Kreisbewegung, die auch eine Komponente in Transportrichtung des Förderers aufweist. Der Drehsinn der Kurbel ist so gewählt, dass sich das Arbeitswerkzeug, während es sich auf das Produkt absenkt, in Transportrichtung des Förderers mit dem Produkt mitbewegt. Es ist nicht mehr erforderlich, den Förderer während jedes Arbeitstaktes der Arbeitswerkzeuge anzuhalten, sondern das Produkt kann bei kontinuierlichem Betrieb des Förderers bearbeitet werden. Dadurch wird nicht nur ein höherer Produktdurchsatz ermöglicht, sondern auch ein ruhigerer und energiesparender Betrieb der Vorrichtung erreicht, da die trägen Massen des Förderers und der Arbeitswerkzeuge weniger stark beschleunigt und wieder abgebremst werden müssen.

Vorteilhafte Ausgestaltungen der Erfindung sind in den Unteransprüchen angegeben.

Bevorzugt werden der Antrieb für die Arbeitswerkzeuge und ein Antrieb für den Förderer so gesteuert, dass sich die Arbeitswerkzeuge während der Phase, in der sie auf das Produkt einwirken, synchron mit dem Förderer in Transportrichtung bewegen.

Im folgenden werden Ausführungsbeispiele der Erfindung anhand der Zeichnung näher erläutert.

Es zeigen:

| | |
|---|---|
| Fig. 1 bis 3 | Prinzipskizzen einer erfindungsgemäßen Vorrichtung, in diesem Beispiel einer Pökelvorrichtung, in drei aufeinanderfolgenden Betriebsstadien; |
| Fig. 4 | ein Weg/Zeit-Diagramm zur Erläuterung der Arbeitsweise der Vorrichtung nach Fig. 1, |
| Fig. 5 bis 6 | Prinzipskizzen analog zu Fig. 1 bis 3 für eine alternative Betriebsweise der Pökelvorrichtung; |
| Fig. 8 und 9 | Prinzipskizzen eines Teils einer Pökelvorrichtung gemäß einem anderen Ausführungsbeispiel in zwei unterschiedlichen Betriebsphasen; und |
| Fig. 9 und 10 | Prinzipskizzen einer Vorrichtung gemäß einem weiteren Ausführungsbeispiel in zwei unterschiedlichen Betriebsphasen. |

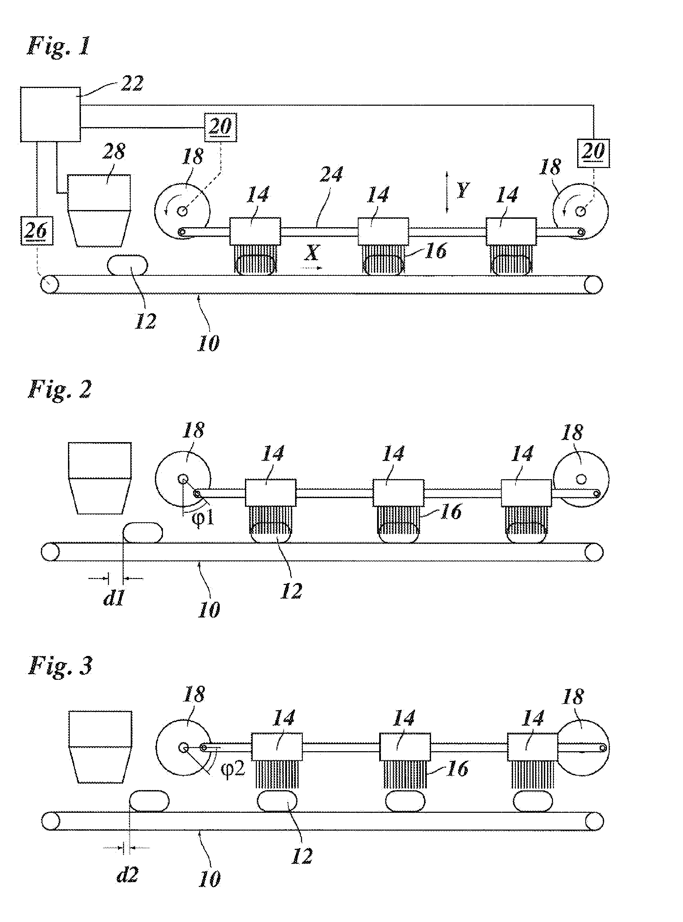

Fig. 1 zeigt schematisch eine Pökelvorrichtung mit einem Förderer 10, beispielsweise einem Förderband, auf dem Produkte 12 (Lebensmittelprodukte) in waagerechter Richtung X transportiert werden. Über dem Förderer 10 sind drei Arbeitswerkzeuge 14 angeordnet, die periodisch in vertikaler Richtung Y relativ zu dem Förderer 10 bewegt werden. Bei den Arbeitswerkzeugen 14 handelt es sich hier um Nadelträger, die an der Unterseite mit Pökelnadeln 16 bestückt sind. Die Pökelnadeln 16 werden über ein nicht gezeigtes Lakezufuhrsystem mit Pökellake versorgt und stechen bei jeder Abwärtsbewegung der Arbeitswerkzeuge in die Produkte 12 ein, so dass Pökellake in die Produkte injiziert wird.

Ein Antrieb für die Arbeitswerkzeuge 14 wird in diesem Beispiel durch zwei drehangetriebene Kurbeln 18 und zugehörige Motoren 20 gebildet, die von einer Steuereinheit 22 gesteuert werden. Die Kurbeln 18 sind in unterschiedlichen Längspositionen des Förderers 10 angeordnet, und ihre Drehachsen verlaufen in waagerechter Richtung rechtwinklig zu der Transportrichtung X des Förderers. Die Arbeitswerkzeuge 14 sind fest an einer gemeinsamen Pleuelstange 24 montiert, die mit ihren entgegengesetzten Enden exzentrisch an die beiden Kurbeln 18 angelenkt ist. Die Steuereinheit 22 sorgt dafür, dass die Kurbeln 18 synchron und phasengleich angetrieben werden, so dass die Pleuelstange 24 und die Arbeitswerkzeuge 14 eine kreisende Bewegung in der X-Y-Ebene ausführen und sich dabei periodisch auf die Produkte 12 absenken und wieder von diesen abheben.

Die Steuereinheit 22 steuert außerdem einen Motor 26 für den Förderer 12, sowie eine Aufgabevorrichtung 28, mit der die Produkte 12 zeitgerecht auf den Förderer 10 aufgelegt werden, so dass die Pökelnadeln 16 der Arbeitswerkzeuge 14 bei jedem Arbeitstakt in eines der Produkte 12 einstechen.

Fig. 1 zeigt eine Betriebsphase, in der sich die Arbeitswerkzeuge 14 an ihrem unteren Totpunkt befinden und die Pökelnadeln 16 zu maximaler Tiefe in die Produkte 12 einstechen. Aufgrund der Drehung der Kurbeln 18 bewegen sich die Arbeitswerkzeuge 14 in diesem Augenblick in der Richtung X, parallel zur Transportrichtung des Förderers, und die Transportgeschwindigkeit des Förderers ist so auf die Drehzahl der Kurbeln 18 abgestimmt, dass sich die Arbeitswerkzeuge 14 und die Produkte 12 mit gleicher Geschwindigkeit bewegen.

Fig. 2 zeigt den Zustand der Vorrichtung zu einem etwas späteren Zeitpunkt. Die Kurbeln 18 haben sich um den Winkel □1 weitergedreht, und die Produkte 12 haben auf dem Förderer 10 den Weg d1 zurückgelegt. Die Arbeitswerkzeuge 14 haben somit den unteren Totpunkt verlassen, und die Pökelnadeln sind ein Stück weit aus den Produkten 12 herausgezogen. Solange die Pökelnadeln noch nicht vollständig aus den Produkten herausgezogen sind, wird der Motor 26 für den Förderer 10 so gesteuert, dass die Transportgeschwindigkeit der Produkte 12 in jedem Zeitpunkt mit der X-Komponente der Geschwindigkeit der Arbeitswerkzeuge 14 übereinstimmt. In Fig. 2 hat sich daher in X-Richtung die Position der Arbeitswerkzeuge 14 relativ zu den Produkten 12 nicht geändert.

Dasselbe gilt auch für den Zustand, der in Fig. 3 gezeigt ist und zu einem noch späteren Zeitpunkt erreicht wird. Die zeitliche Differenz zwischen Fig. 2 und 3 ist dabei die gleiche wie die zwischen Fig. 1 und 2. Die Kurbeln 18 haben den Winkel □2 zurückgelegt und die Pökelnadeln 16 sind vollständig aus den Produkten 12 herausgezogen. Da die Kurbeln 18 in diesem Beispiel mit konstanter Drehgeschwindigkeit angetrieben werden, gilt □2 = □1. Die X-Komponente der Geschwindigkeit der Arbeitswerkzeuge 14 hat jedoch abgenommen, und folglich ist der Weg d2, den die Produkte zwischen Fig. 2 und Fig. 3 zurückgelegt haben, kleiner als der Weg d1.

Während der nächsten 180°-Drehung der Kurbeln 18 brauchen die Geschwindigkeiten der Kurbeln und des Förderers nicht synchronisiert zu sein, da die Nadeln nicht in das Fleisch einstechen. Erst wenn die Nadeln wieder eine Stellung hinter dem oberen Totpunkt erreicht haben, in der sie kurz davor sind, wieder in die Produkte 12 einzustechen, wird die Transportgeschwindigkeit des Förderers 10 wieder mit der konstanten Drehzahl der Kurbeln 18 synchronisiert, so dass die Pökelnadeln, während sie in die Produkte einstechen, sich in X-Richtung synchron mit den Produkten 12 bewegen. Schließlich wird wieder der in Fig.1 gezeigte Zustand erreicht, und es beginnt ein neuer Arbeitstakt.

Im gezeigten Beispiel werden die Produkte 12 von der Aufgabevorrichtung 28 so auf den Förderer 10 aufgelegt, dass jedes Produkt von jedem der drei Arbeitswerkzeuge 14 bearbeitet wird. In einer alternativen Ausführungsform können die Taktrate der Aufgabevorrichtung 28 und die Geschwindigkeit des Förderers 10 während der Phase, in der die Arbeitswerkzeuge 14 den oberen Totpunkt durchlaufen, erhöht sein, so dass während jedes Arbeitstaktes der Arbeitswerkzeuge 14 drei neue Produkte zugeführt werden, von denen dann jedes von einem anderen Arbeitswerkzeug 14 bearbeitet wird.

In noch einer anderen Ausführungsform kann auf die Aufgabevorrichtung verzichtet werden und die Produkte können in lückenloser Folge auf den Förderer aufgelegt werden. Die Umdrehungsperiode der Kurbeln und die Geschwindigkeit des Förderers 10 sind dann so aufeinander abgestimmt, dass sämtliche Produkte, die zusammen die Oberfläche des Förderers vollständig ausfüllen, gleichmäßig und vollflächig bearbeitet werden.

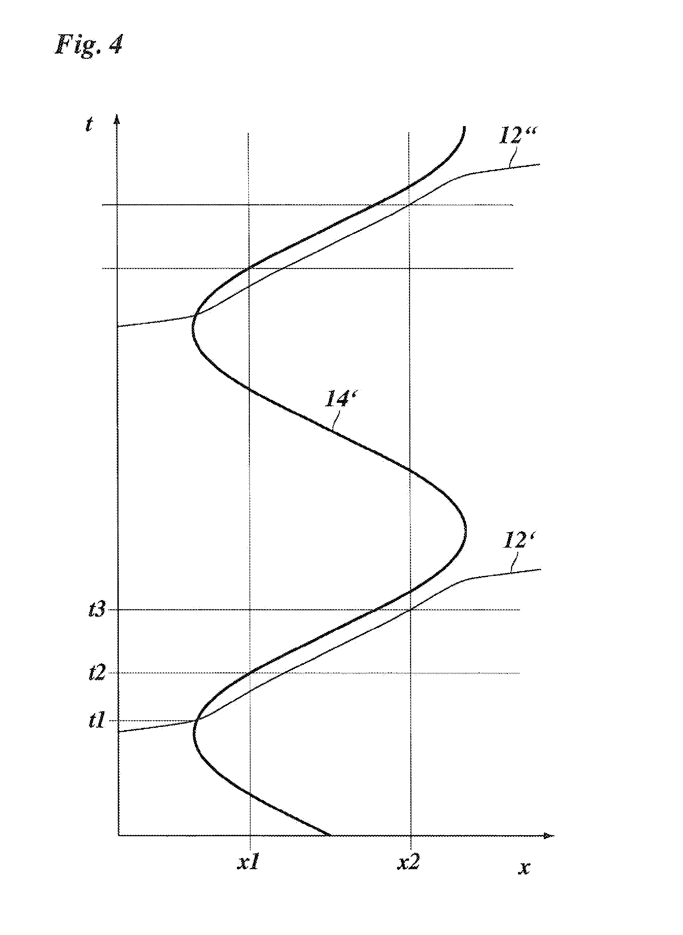

In Fig. 4 sind die oben geschilderten Vorgänge in einem Weg/Zeit-Diagramm dargestellt. Die Zeit t ist auf der vertikalen Achse aufgetragen, und der Weg x, den die Produkte 12 und die Arbeitswerkzeuge 14 in X-Richtung zurücklegen, ist auf der waagerechten Achse aufgetragen. Die Kurve 14' gibt die Bewegung eines einzelnen Arbeitswerkzeugs 14 an, während die Kurven 12' und 12" die Bewegung zweier Produkte 12 angeben, die nacheinander von diesem einen Arbeitswerkzeug bearbeitet werden.

Da die Kurbeln 18 mit konstanter Drehzahl angetrieben werden, ist die Kurve 14' eine Sinuskurve. Die Kurve 12' verläuft zunächst, bis zum Zeitpunkt t1 relativ flach, da der Förderer 10 in dieser Phase eine hohe Geschwindigkeit hat, so dass das Produkt rasch zugeführt wird. Ab dem Zeitpunkt t1 wird dann die Bewegung des Förderers 10 verzögert, so dass seine Geschwindigkeit zum Zeitpunkt t2 mit der Geschwindigkeit des Arbeitswerkzeugs 14 (in X-Richtung) übereinstimmt. Von diesem Zeitpunkt an können die Pökelnadeln in das Produkt einstechen, und das Arbeitswerkzeug und das Produkt bewegen sich gemeinsam von der Position x1 zur Position x2. Spätestens zum Zeitpunkt t3 treten die Pökelnadeln wieder aus dem Produkt aus, und ab dem Zeitpunkt t3, wenn das Produkt und der Nadelträger die Position x2 erreicht haben, wird der Förderer 10 wieder beschleunigt. Das Arbeitswerkzeug läuft zur Anfangsposition zurück, um das nächste Produkt zu bearbeiten, dessen Weg durch die Kurve 12" beschrieben wird.

Man erkennt, dass die Kurve 14 zwischen den Positionen x1 und x2 nahezu geradlinig verläuft, so dass die Arbeitswerkzeuge und die Produkte sich auch dann nahezu synchron bewegen, wenn der Förderer in der Zeitspanne zwischen t2 und t3 mit konstanter Geschwindigkeit angetrieben wird. Es ist deshalb auch eine Arbeitsweise denkbar, bei der der Förderer 10 ständig mit konstanter Geschwindigkeit läuft oder periodisch zwischen zwei konstanten Geschwindigkeiten wechselt.

Wenn das Intervall zwischen den Positionen x1 und x2 vergrößert wird, steht mehr Zeit zur Bearbeitung des Produkts zur Verfügung, doch machen sich dann die Nichtlinearitäten der Kurve 14' deutlicher bemerkbar, so dass ein entsprechender nicht-gleichförmiger Antrieb des Förderers 10 erforderlich sein kann.

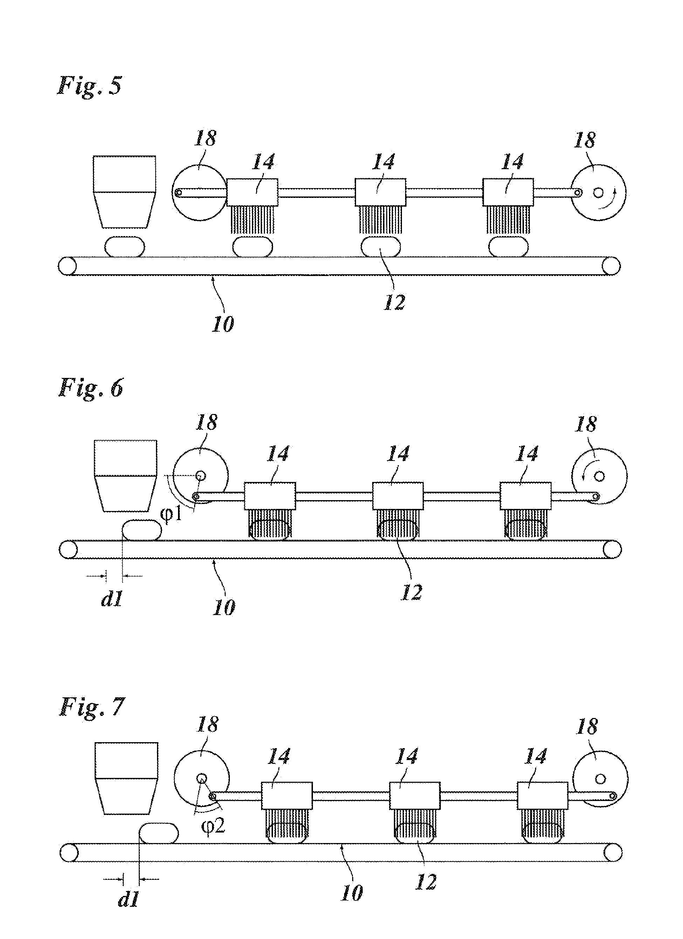

Fig. 5 bis 7 zeigen eine alternative Betriebsweise, bei der der Förderer 10 stets mit konstanter Geschwindigkeit angetrieben wird und statt dessen die Drehzahl der Kurbeln 18 variiert wird. Fig. 5 zeigt den Zustand kurz bevor die Pökelnadeln in die Produkte 12 einstechen. Eine gewisse Zeitspanne später wird der Zustand nach Fig. 6 erreicht. Der Förderer hat sich um den Weg d1 weiter bewegt und die Kurbeln 18 haben den Winkel □1 zurückgelegt. Noch einmal dieselbe Zeitspanne später ist der Zustand nach Fig. 7 erreicht. Der Förderer 10 hat sich noch einmal um den Weg d1 weiterbewegt, doch haben die Kurbeln 18 in dieser Zeitspanne nur einen kleineren Winkel □2 zurückgelegt.
Die Drehzahl der Kurbeln 18 wird hier während der Phase, in der die Nadeln in das Produkt einstechen, stets so geregelt, dass die X-Komponente der Geschwindigkeit der Arbeitswerkzeuge 14 mit der Geschwindigkeit des Förderers 10 übereinstimmt. Während des Rückwärtshubes, also beim Durchlaufen des oberen Totpunktes, können die Kurbeln 18 mit höherer Geschwindigkeit angetrieben werden, um die Taktzeit insgesamt zu verkürzen.

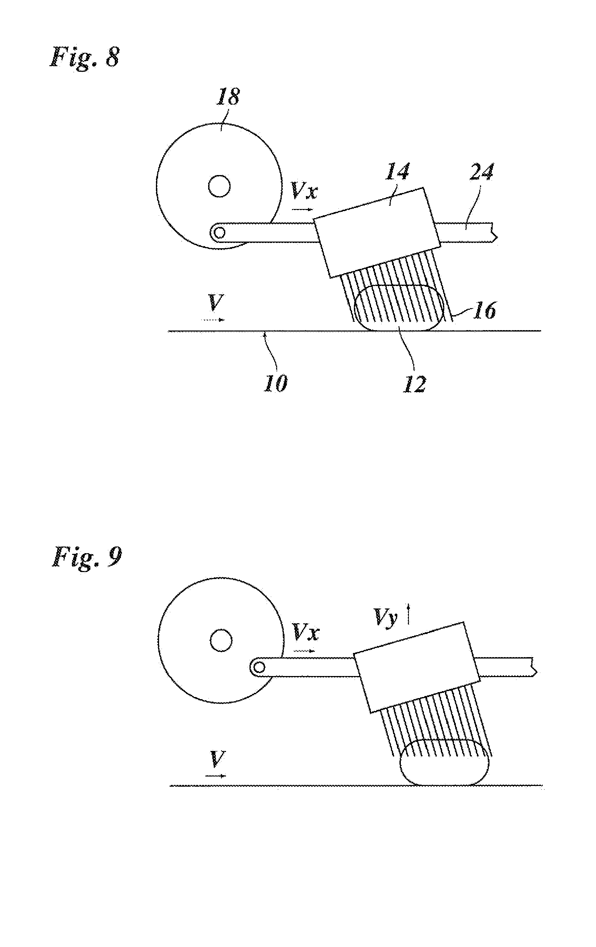

Unter gewissen Umständen kann es erforderlich sein, dass die Pökelnadeln 16 schräg in das Produkt 12 einstechen, wie in Fig. 8 und 9 gezeigt ist. In diesem Fall können die Nadelträger 14 in ihrer Neigung relativ zu der Pleuelstange 24 verstellt werden, und das Steuerprogramm der Steuereinrichtung 22 wird so modifiziert, dass die Geschwindigkeiten des Förderers 10 und der Kurbeln 18 entsprechend angepasst werden. Wenn, wie im gezeigten Beispiel, die Pökelnadeln in Vorwärts-Transportrichtung des Förderers geneigt sind, muss beim Abwärtshub der Arbeitswerkzeuge die X-Komponente der Geschwindigkeit der Arbeitswerkzeuge etwas größer sein als die Transportgeschwindigkeit des Produkts 12, damit die Nadeln geradlinig in das Produkt einstechen können.

Beim Aufwärtshub (Fig. 9) muss dagegen die Transportgeschwindigkeit des Förderers etwas größer sein.

Wenn beispielsweise die Kurbeln 18 mit konstanter Geschwindigkeit angetrieben werden, Vx und Vy die X- und Y-Komponenten der Geschwindigkeit des Arbeitswerkzeugs 14 sind, V die Transportgeschwindigkeit des Förderers 10 ist und □ der Neigungswinkel der Pökelnadeln 16 (relativ zur Senkrechten), so muss gelten:

$$V = Vx + Vy * \sin(\square)$$

(beim Abwärtshub ist Vy negativ).

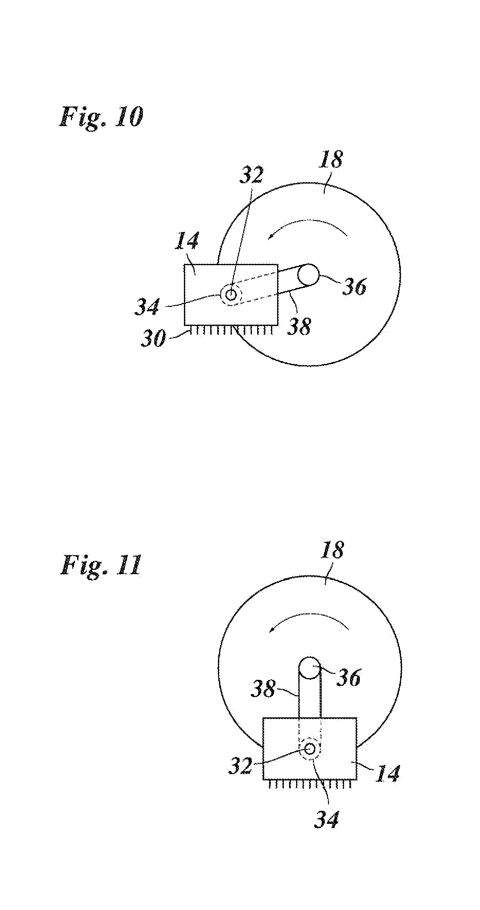

Bei den zuvor beschriebenen Ausführungsbeispielen bildet die Pleuelstange 24 zusammen mit den synchron angetriebenen Kurbeln 18 einen Mechanismus zur Parallelführung der Arbeitswerkzeuge 14, so dass diese stets dieselbe Orientierung relativ zum Förderer 10 haben. Bei Vorrichtungen, die in Transportrichtung des Förderers nur eine geringe Baulänge haben, kann das Arbeitswerkzeug 14 auch direkt an der Kurbel 18 montiert sein, wie in Fig. 10 und 11 gezeigt ist. Als Beispiel ist in diesen Figuren als Arbeitswerkzeug 14 ein Steaker dargestellt, der an der Unterseite mit verhältnismäßig kurzen Messern 30 bestückt ist.

Relativ zu der Kurbel 18 ist das Arbeitswerkzeug 14 um eine Achse 32 drehbar. Der Parallelführungsmechanismus für das Arbeitswerkzeug wird hier durch eine relativ zu dem Arbeitswerkzeug starr auf der Achse 32 sitzende Riemenscheibe 34, eine auf der Achse der Kurbel 18 sitzende, jedoch drehfeste Riemenscheibe 36 und einen über beide Riemenscheiben 34, 36 geführten Treibriemen 38 gebildet. Wenn sich die Kurbel 18 um einen bestimmten Winkel weitergedreht hat, wie in Fig. 11 gezeigt ist, so hat sich das Arbeitswerkzeug 14 relativ zu der Kurbel 18 um denselben Winkel in entgegengesetzter Richtung gedreht, so dass Arbeitswerkzeug stets seine Orientierung im Raum beibehält.

Wenn der Treibriemen 38 dehnungselastisch ist, kann das Arbeitswerkzeug 14 relativ zur Transportrichtung X etwas pendeln, so dass kleine Geschwindigkeitsunterschiede zwischen dem Arbeitswerkzeug 14 und dem Produkt 12 ausgeglichen werden können, während die Messer 30 in das Produkt einschneiden.

Wenn mehrere Kurbeln der in Fig. 10 und 11 gezeigten Art an einem gemeinsamen Förderer angeordnet sind, können sie einzeln angetrieben werden, beispielsweise so, dass ihre Arbeitswerkzeuge zeitversetzt oder im Gegentakt arbeiten.

**Patentansprüche**

1. Vorrichtung zur Behandlung von Lebensmittelprodukten (12), mit einem Förderer (10) für die Lebensmittelprodukte, mindestens einem Arbeitswerkzeug (14), und einem Antrieb (18, 20), der das Arbeitswerkzeug (14) zur einer Bewegung relativ zu dem Förderer (10) antreibt, wobei diese Bewegung eine Komponente in einer Richtung (Y) senkrecht zur Transportrichtung (X) des Förderers (10) aufweist, **dadurch gekennzeichnet, dass** der Antrieb mindestens eine drehangetriebene Kurbel (18) aufweist, an der das Arbeitswerkzeug (14) exzentrisch gelagert ist.

2. Vorrichtung nach Anspruch 1, **gekennzeichnet durch** einen Parallelführungsmechanismus (24; 34-38), der das Arbeitswerkzeug (14) in einer konstanten Orientierung relativ zu dem Förderer (10) hält.

3. Vorrichtung nach Anspruch 2, **dadurch gekennzeichnet, dass** der Parallelführungsmechanismus durch eine Pleuelstange (24) gebildet wird, die an zwei synchron angetriebenen Kurbeln (18) gelagert ist und an der das Arbeitswerkzeug (14) montiert ist.

4. Vorrichtung nach einem der vorstehenden Ansprüche, **gekennzeichnet durch** eine Steuereinrichtung (22) zur Steuerung der Transportgeschwindigkeit des Förderers (10) und der Drehgeschwindigkeit der Kurbel (18), derart, dass zwischen der Transportgeschwindigkeit (V) des Förderers (10) und der Komponente (Vx) der Geschwindigkeit des Arbeitswerkzeugs (14) in der Transportrichtung (X) eine vorgegebene Beziehung eingehalten wird.

*Fig. 1*

*Fig. 2*

*Fig. 3*

*Fig. 4*

*Fig. 5*

*Fig. 6*

*Fig. 7*

*Fig. 8*

*Fig. 9*

Fig. 10

Fig. 11